# EUROPÄISCHE PATENTSCHRIFT

(11) **EP 3 231 648 B1**
(45) Veröffentlichungstag und Bekanntmachung des Hinweises auf die Patenterteilung: **17.06.2020**
(21) Anmeldenummer: 17161504.0
(22) Anmeldetag: 17.03.2017
(51) Int. Cl.: B60J 1/00, B60K 16/00, B60L 8/00

(54) **FAHRZEUG, INSBESONDERE NUTZFAHRZEUG, MIT ENERGIEGEWINNUNGSANLAGE**
VEHICLE, IN PARTICULAR COMMERCIAL VEHICLE, WITH AN ENERGY GENERATION SYSTEM
VÉHICULE, EN PARTICULIER VÉHICULE UTILITAIRE, ÉQUIPÉ D'UNE INSTALLATION DE PRODUCTION D'ÉNERGIE

(30) Priorität: 16.04.2016 DE 102016004647
(43) Veröffentlichungstag der Anmeldung: 18.10.2017
(73) Patentinhaber: MAN Truck & Bus SE, 80995 München (DE)
(72) Erfinder: Antwerpen, Korbinian, 80807 München (DE)
(74) Vertreter: v. Bezold & Partner Patentanwälte - PartG mbB

(56) Entgegenhaltungen:
- WO-A1-2010/083408
- WO-A1-2011/094099
- WO-A2-2009/077567
- CN-A- 101 693 443
- DE-A1-102008 009 848
- DE-A1-102009 058 891
- DE-U1-202008 010 208
- US-A1- 2008 078 194
- G. PHANI ET AL.: "Titania solar cells: new photovoltaic technology", RENEWABLE ENERGY, Bd. 22 (2001), 31. Dezember 2001 (2001-12-31), Seiten 303-309, XP002773502,

## Beschreibung

Die Erfindung betrifft ein Fahrzeug mit einer Energiegewinnungsanlage, insbesondere einer Photovoltaikanlage. Das Fahrzeug ist vorzugsweise ein Kraftfahrzeug, insbesondere ein Nutzfahrzeug, z. B. ein Omnibus oder ein Lastkraftwagen.

Kraftfahrzeuge mit Photovoltaikanlage sind im Stand der Technik bereits in unterschiedlichsten Ausführungsformen bekannt. So ist es z. B. bekannt, Photovoltaikmodule auf Dachflächen von Kraftfahrzeugen anzuordnen. Die Photovoltaikmodule stellen dabei meist ein Gesamtsystem dar, das dazu dient, elektrische Energie in ein Bordnetz des Fahrzeugs zu speisen.

Die WO 2010/083408 A1 offenbart eine Photovoltaikvorrichtung für ein Fahrzeug, die eine Vielzahl von Solarmodulen enthält, die elektrisch voneinander isoliert sind und geeignet sind, Sonnenstrahlung zu empfangen und die Strahlung in elektrische Energie umzuwandeln. Das Gerät enthält mindestens einen DC/DC-Wandler, der mit den galvanisch getrennten Modulen elektrisch gekoppelt ist, um die elektrische Energie von den Solarmodulen zu empfangen und die Spannung zu erhöhen, die an mindestens eine Komponente des Fahrzeugs geliefert werden soll.

Die WO 2009/077567 A2 offenbart Kraftfahrzeug mit elektrischem Antrieb, das einen Elektromotor, eine wiederaufladbare Batterie und außerdem eine Karosserie umfasst, die aus einem lichtundurchlässigen Material verwirklicht ist. Das lichtundurchlässige Material, aus dem die Karosserie verwirklicht ist, umfasst photovoltaische Zellen.

Die DE 10 2009 058891 A1 offenbart ein Solaranlagensystem für ein Fahrzeug, umfassend mehrere Solarmodulvorrichtungen, wobei die Solarmodulvorrichtungen jeweils mindestens ein Solarmodul umfassen und auf verschiedenen Solarmodulbereichen des Fahrzeugs anbringbar sind. Das Solaranlagensystem weist mehrere Vorrichtungen zur Maximalleistungsentnahme auf, wobei jeder der Solarmodulvorrichtungen eine der mehreren Vorrichtungen zur Maximalleistungsentnahme zugeordnet ist, um die aktuell maximal erreichbare Leistung der jeweiligen Solarmodulvorrichtungen entnehmen zu können.

Die DE 20 2008 010208 U1 offenbart, dass ein Energiesystem eines Kraftfahrzeugs umfassend Solar-Dünnschichtzellen mit Triple-Junction-Technologie zur Energiegewinnung verendet werden kann. Mit der durch das Energiesystem gewonnenen Energie können Kühlaggregate, Klimaanlage, Heizungen aller Art, wie Standheizung und Sitzheizung komplett- oder teilversorgt werden.

Zum weiteren Stand der Technik wird auf die DE 10 2008 009848 A1, die US 2008/078194 A1 und die WO 2011/094099 A1 hingewiesen.

Eine Aufgabe der Erfindung ist es, ein Fahrzeug mit einer Energiegewinnungsanlage zu schaffen, die eine verbesserte Energieausbeute ermöglicht. Hauptziel ist insbesondere die Stützung (Energieversorgung) eines Fahrzeugs-Bordnetzes (z. B. 24V-Bornetz), die Vermeidung einer Tiefentladung einer oder mehrerer Fahrzeugbatterien (z. B. 24V-Fahrzeugbatterien) und/oder die Bereitstellung elektrischer Energie zum Betrieb einer Klima-, Lüftungs- und/oder Kälteanlage des Fahrzeugs.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Fahrzeug, vorzugsweise ein Kraftfahrzeug, insbesondere ein Nutzfahrzeug, z. B. einen Omnibus oder einen Lastkraftwagen.

Das Fahrzeug umfasst eine Dachfläche, einen Außenumfang und eine Energiegewinnungsanlage, die eine Photovoltaikanlage ist, zweckmäßig zur Umwandlung eines Teils von Sonnenstrahlung in elektrische Energie. Der Außenumfang umfasst insbesondere zwei Außenseiten (z. B. "linke" und "rechte" Außenseiten), eine Heckseite, eine Frontseite und/oder eine Dachfläche.

Das Fahrzeug zeichnet sich insbesondere dadurch aus, dass die Energiegewinnungsanlage ein erstes Teilsystem (zweckmäßig Teilfläche) und zumindest ein zweites Teilsystem (zweckmäßig Teilfläche) umfasst und dem ersten Teilsystem eine eigene erste Steuereinrichtung zum Steuern des ersten Teilsystems zugeordnet ist und dem zweiten Teilsystem eine eigene zweite Steuereinrichtung zum Steuern des zweiten Teilsystems zugeordnet ist.

Alternativ oder ergänzend zeichnet sich das Fahrzeug insbesondere dadurch aus, dass der Außenumfang zumindest teilweise als Nutzfläche für das erste Teilsystem genutzt wird, so dass sich vorzugsweise das erste Teilsystem zumindest über einen Teil des Außenumfangs erstreckt, z. B. darin integriert ist, daran montiert ist, daran aufgebracht ist und/oder ihn zumindest abschnittsweise überlappt.

Die Erfindung kann damit insbesondere eine Erweiterung der Nutzflächen für eine Energiegewinnungsanlage auf den Außenumfang des Fahrzeugs schaffen, woraus sich vorzugsweise auch eine Erweiterung der Nutzung der mittels der Energiegewinnungsanlage gewonnenen Energie und Leistung ergibt. Daraus ergeben sich insbesondere die Nutzung und der Verbund der Energiegewinnungsanlage auf unterschiedlichen Teilnutzflächen, um bei unterschiedlicher Fahrzeugausrichtung und/oder im Fahrbetrieb eine hohe Energieausbeute und verbesserte Leistungsbereitstellung erzielen zu können. Der Nutzen der Energiegewinnungsanlage ist vorzugsweise die Bereitstellung elektrischer Energie an das Fahrzeug-Bordnetz (insbesondere 24V-Bordnetz), die Vermeidung von Tiefentladung(en) einer oder mehrerer Fahrzeugbatterien (z. B. 24V-Batterien) und/oder die Bereitstellung elektrischer Energie zum Betrieb einer Klima-, Lüftungs- und/oder Kälteanlage des Fahrzeugs.

Das erste Teilsystem kann z. B. zumindest ein Energiegewinnungsmodul (zweckmäßig Photovoltaikmodul) umfassen und/oder das zweite Teilsystem kann z. B. zumindest ein Energiegewinnungsmodul (zweckmäßig Photovoltaikmodul) umfassen.

Es ist möglich, dass der Außenumfang zumindest eine vorzugsweise transparente Fensterscheibe aufweist, z. B. eine oder mehrere Seitenscheiben, zumindest eine Front-Fensterscheibe und/oder eine Heck-Fensterscheibe.

Es ist möglich, dass die Fensterscheibe als Nutzfläche für das erste Teilsystem dient und/oder sich das erste Teilsystem über die Fensterscheibe erstreckt. Das erste Teilsystem kann vorzugsweise auf die Fensterscheibe aufgebracht sein, in die Fensterscheibe integriert sein und/oder die Fensterscheibe zumindest abschnittsweise überlappen, z. B. außen oder innen relativ zur Fensterscheibe seitlich beabstandet.

Das erste Teilsystem, insbesondere dessen zumindest ein Energiegewinnungsmodul, kann z. B. semitransparent und/oder vom Fahrzeug-Innenraum aus zweckmäßig zumindest geringfügig durchschaubar ausgeführt sein.

Der Außenumfang umfasst zweckmäßig zwei Außenseiten ("linke" Fahrzeugseite und "rechte" Fahrzeugseite), die vorzugsweise jeweils zumindest eine Fensterscheibe aufweisen, eine Heckseite, die vorzugsweise zumindest eine Fensterscheibe aufweist, eine Frontseite, die vorzugsweise eine Fensterscheibe aufweist, und/oder eine Dachfläche.

Das erste Teilsystem kann an, zweckmäßig auf, einer der Außenseiten, der Heckseite, der Frontseite und/oder der Dachfläche angeordnet sein. Alternativ oder ergänzend kann das zweite Teilsystem an, zweckmäßig auf, der anderen der Außenseiten, der Heckseite, der Frontseite und/oder der Dachfläche angeordnet sein.

Das erste Teilsystem und/oder das zweite Teilsystem kann zumindest eines von folgenden umfassen: zumindest ein semitransparentes Energiegewinnungsmodul, vorzugsweise zumindest ein semitransparentes Dünnschicht-Photovoltaik-Modul, zumindest ein flexibles Energiegewinnungsmodul, z. B. zumindest ein flexibles Dünnschicht-Photovoltaik-Modul, zumindest ein monokristallines Energiegewinnungsmodul, insbesondere ein monokristallines Photovoltaik-Modul, und/oder zumindest ein polykristallines Energiegewinnungsmodul, insbesondere ein polykristallines Photovoltaik-Modul.

Es ist möglich, dass die Energiegewinnungsanlage mit einem Bordnetz und/oder einer Fahrzeugbatterie, insbesondere 24V-Bordnetz und/oder 24V-Fahrzeugbatterie, des Fahrzeugs in Verbindung steht, um das Bordnetz und/oder die Fahrzeugbatterie mit Energie zu versorgen. Alternativ oder ergänzend kann die Energiegewinnungsanlage mit einer Klima-, Kälte- und/oder Lüftungsanlage des Fahrzeugs in Verbindung stehen, um die Klima-, Kälte- und/oder Lüftungsanlage mit zweckmäßig elektrischer Energie zu versorgen.

Es ist darüber hinaus möglich, dass die erste Steuereinrichtung und/oder die zweite Steuereinrichtung mit zumindest einer Steuereinrichtung zum Steuern der Klima-, Kälte- und/oder Lüftungsanlage des Fahrzeugs in Verbindung steht. Dabei können die erste Steuereinrichtung und/oder die zweite Steuereinrichtung und die zumindest eine Steuereinrichtung für die Klima-, Kälte- und/oder Lüftungsanlage zweckmäßig miteinander interagieren.

Die erste Steuereinrichtung und/oder die zweite Steuereinrichtung kann z. B. einen MPP-Tracker (Maximum Power Point Tracker) umfassen, insbesondere eine MPP-Tracker-Stromsteuereinheit.

Das erste Teilsystem und/oder das zweite Teilsystem kann im Wesentlichen senkrecht ausgerichtet sein.

Die Energiegewinnungsanlage ist als Photovoltaikanlage ausgeführt.

Zu erwähnen ist, dass im Rahmen der Erfindung das Merkmal "Steuereinrichtung zum Steuern" auch z. B. eine "Regeleinrichtung zum Regeln" umfassen kann oder als solche ausgeführt sein kann.

Zu erwähnen ist ferner, dass im Rahmen der Erfindung das erste Teilsystem mit der eigenen Steuereinrichtung und das zweite Teilsystem mit der eigenen Steuereinrichtung insbesondere einer der Außenseiten, der Heckseite, der Frontseite und/oder der Dachfläche zugeordnet sein kann, also insbesondere ein und derselben Fahrzeugseite. Alternativ oder ergänzend ist es im Rahmen der Erfindung möglich, dass z. B. das erste Teilsystem mit der eigenen Steuereinrichtung der Heckseite und das zweite Teilsystem mit der eigenen Steuereinrichtung der Frontseite zugeordnet ist oder gemäß einer anderen geeigneten Kombination aus der einen Außenseite, der anderen Außenseite, der Heckseite, der Frontseite und/oder der Dachfläche, also insbesondere unterschiedlichen Fahrzeugseiten.

Zu erwähnen ist außerdem, dass im Rahmen der Erfindung insbesondere eine oder mehrere Fensterscheiben als Nutzfläche für eines oder mehrere der Teilsysteme genutzt werden können. Alternativ oder ergänzend kann allerdings auch die Fahrzeugkarosserie als Nutzfläche für eines oder mehrere der Teilsysteme genutzt werden, so dass ein Teilsystem z. B. in die Fahrzeugkarosserie integriert oder daran aufmontiert sein kann.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung einer Energiegewinnungsanlage gemäß einer Ausführungsform der Erfindung und
- Figur 2: zeigt ein Fahrzeug gemäß einer Ausführungsform der Erfindung, vorzugsweise mit einer wie in Figur 1 gezeigten Energiegewinnungsanlage.

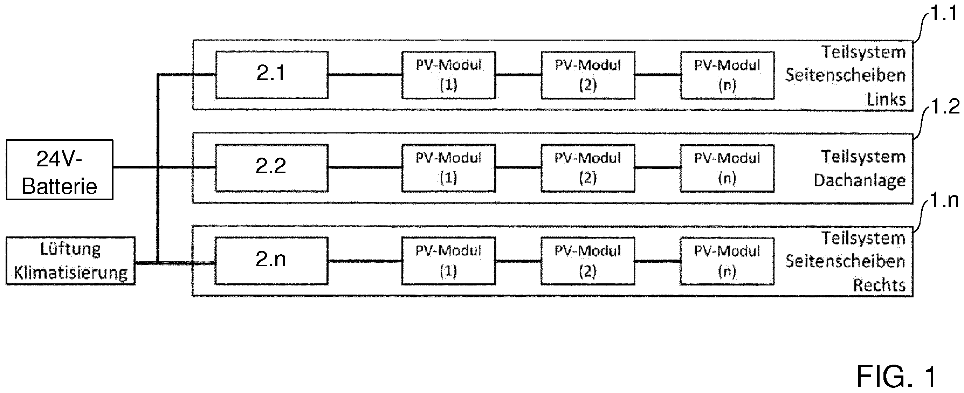

Figur 1 zeigt eine schematische Darstellung einer Energiegewinnungsanlage, insbesondere einer Photovoltaikanlage, für ein Fahrzeug, insbesondere ein Kraftfahrzeug, vorzugsweise ein Nutzfahrzeug, z. B. einen Lastkraftwagen oder einen Omnibus.

Die Energiegewinnungsanlage umfasst ein erstes Teilsystem 1.1, ein zweites Teilsystem 1.2 und ein drittes Teilsystem 1.n.

Das erste Teilsystem 1.1 umfasst mehrere zweckmäßig als Photovoltaik-Module (PV-Module) ausgeführte Energiegewinnungsmodule. Das zweite Teilsystem 1.2 umfasst mehrere zweckmäßig als Photovoltaik-Module (PV-Module) ausgeführte Energiegewinnungsmodule. Das dritte Teilsystem 1.n umfasst mehrere zweckmäßig als Photovoltaik-Module (PV-Module) ausgeführte Energiegewinnungsmodule.

Dem ersten Teilsystem 1.1 ist eine eigene erste Steuereinrichtung 2.1 zum Steuern des ersten Teilsystems 1.1 zugeordnet. Dem zweiten Teilsystem 1.2 ist eine eigene zweite Steuereinrichtung 2.2 zum Steuern des zweiten Teilsystems 1.2 zugeordnet ist. Darüber hinaus ist dem dritten Teilsystem 1.n eine eigene dritte Steuereinrichtung 2.n zum Steuern des dritten Teilsystems 1.n zugeordnet.

Im Rahmen der Erfindung können auch nur zwei Teilsysteme 1.1 und 1.2 oder mehr als drei Teilsysteme (1.n, mit: n=4, n=5, usw.) zur Anwendung kommen, mit jeweils eigener Steuereinrichtung (2.n, mit: n=4, n=5, usw.).

In der in Figur 1 gezeigten Ausführungsform sind die Steuereinrichtungen 2.1, 2.2 und 2.n jeweils als MPPT-Stromregler (MPPT...Maximum Power Point Tracker) ausgeführt, um die Energieausbeute der Teilsysteme 1.1, 1.2 und 1.n zweckmäßig maximieren zu können.

Die Energiegewinnungsanlage und somit deren erstes Teilsystem 1.1, deren zweites Teilsystem 1.2 und deren drittes Teilsystem 1.n stehen mit einem Bordnetz, insbesondere einem 24V-Bordnetz, z. B. einer 24V-Bordnetz-Batterie in Verbindung, um selbige mit elektrischer Energie zu versorgen. Darüber hinaus steht die Energiegewinnungsanlage und somit wiederum deren erstes Teilsystem 1.1, deren zweites Teilsystem 1.2 und deren drittes Teilsystem 1.n mit einer Klima-, Kälte- und/oder Lüftungsanlage des Fahrzeugs in Verbindung, um selbige mit elektrischer Energie zu versorgen. Dabei ist es insbesondere möglich, dass die erste Steuereinrichtung 2.1, die zweite Steuereinrichtung 2.2 und die dritte Steuereinrichtung 2.n mit der Steuereinrichtung zum Steuern der Klima-, Kälte- und/oder Lüftungsanlage in Verbindung stehen.

Damit die Energieausbeute der Teilsysteme 1.1, 1.2 und 1.n der Energiegewinnungsanlage möglichst groß ist, wird die Anbindung an das 24V-Bordnetz des Fahrzeugs und die Stromregelung jedes Teilsystems 1.1, 1.2 und 1.n durch eine eigene Steuereinrichtung 2.1, 2.2 und 2.n (z. B. Stromregler) realisiert.

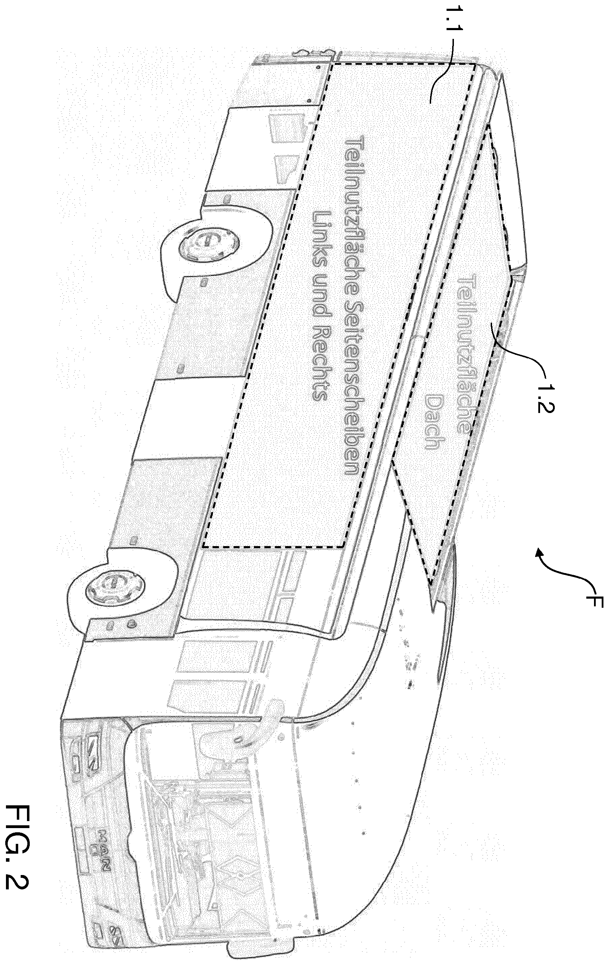

Figur 2 zeigt eine perspektivische Ansicht eines Fahrzeugs F gemäß einer Ausführungsform der Erfindung, das vorzugsweise mit einer Energiegewinnungsanlage gemäß Figur 1 ausgestattet ist, so dass hierfür auf die Beschreibung zu Figur 1 verwiesen wird, um Wiederholungen zu vermeiden. Das Fahrzeug F ist in der in Figur 2 gezeigten Ausführungsform ein Omnibus.

Das Fahrzeug F umfasst eine Dachfläche und einen Außenumfang. Der Außenumfang umfasst zwei Außenseiten ("linke" und "rechte" Fahrzeugaußenseite), eine Heckseite und eine Frontseite. Die Außenseiten, die Heckseite und die Frontseite umfassen jeweils eine oder mehrere zweckmäßig transparente Fensterscheiben.

Bei dem Fahrzeug F wird nicht nur die Dachfläche als Nutzfläche für die Energiegewinnungsanlage genutzt, sondern auch ein Teil des Außenumfangs, nämlich die Außenseiten, insbesondere deren Fensterscheiben.

Das erste Teilsystem 1.1 ist auf eine Fensterscheibe der einen Außenseite (z. B "linke" Fahrzeugaußenseite) aufgebracht, darin integriert oder überlappt die Fensterscheibe zumindest abschnittsweise, während das dritte Teilsystem 1.n auf eine Fensterscheibe der anderen Außenseite (z. B. "rechte" Fahrzeugaußenseite) aufgebracht ist, darin integriert ist oder die Fensterscheibe zumindest abschnittsweise überlappt. Das zweite Teilsystem 1.2 ist zweckmäßig auf der Dachfläche angeordnet.

Dabei ist besonders bevorzugt, dass das erste Teilsystem 1.1 und das dritte Teilsystem 1.n zumindest semitransparent ausgeführt sind, insbesondere vom Innenraum des Fahrzeugs F aus zumindest teilweise durchschaubar sind.

Das erste Teilsystem 1.1 und das dritte Teilsystem 1.n umfasst insbesondere semitransparente Photovoltaikmodule, welche als Seitenscheiben eingesetzt werden können oder Seitenscheiben, auf welche semitransparente Dünnschicht-Photovoltaik-Module aufgebracht sind. Durch die Semitransparenz ist zweckmäßig ein Hindurchblicken der Seitenscheiben durch den Fahrgast gewährleistet.

Im Bereich des Fahrzeugdaches können auch z. B. intransparente Dünnschicht-Photovoltaik-Module eingesetzt werden, da hier ein Hindurchblicken nicht erforderlich ist und eine maximale Energieausbeute angestrebt wird.

Da die Energiegewinnungsanlage das Fahrzeuggewicht erhöht, sind möglichst leichte (Photovoltaik-) Modultechnologien einzusetzen, um den Gewichtszuwachs gering zu halten. Bei der Auswahl der (Photovoltaik-) Modultechnologie und der Systemgröße der Energiegewinnungsanlage ist insbesondere darauf zu achten, dass die erzeugte Energie durch die Energiegewinnungsanlage größer ist als der Mehrverbrauch an Fahrenergie, welche durch das Fahrgewicht der Energiegewinnungsanlage entsteht.

Die Erfindung schafft insbesondere einen Aufbau einer mehrere Teilsysteme 1.1, 1.2 und 1.n (Teilflächen) aufweisenden Energiegewinnungsanlage mit jeweiliger Steuereinrichtung 2.1, 2.2 und 2.n (Regelelektronik) zur Einbindung in zweckmäßig ein 24V-Bornetz. Durch die Aufteilung der Energiegewinnungsanlage in Teilsysteme 1.1, 1.2 und 1.n mit jeweils eigener Steuereinrichtung 2.1, 2.2 und 2.n können diese zweckmäßig mit unterschiedlichen Neigungen, Positionierungen und (Photovoltaik-) Modultechnologien (z. B. "Polykristalin", "Monokristalin", "Dünnschicht" und/oder "Flexibel Dünnschicht") realisiert und mit verbesserter Energieausbeute - im Vergleich zu einem nicht aufgeteilten System - in das z. B. 24V-Bordnetz integriert werden.

Die Erfindung schafft außerdem insbesondere eine Erweiterung der Nutzflächen für die Energiegewinnungsanlage auf die Seitenscheiben-Flächen des Fahrzeugs F, die ansonsten eine große unbebaute Fläche auf dem Fahrzeug F darstellen, und darüber hinaus vorzugsweise eine Erweiterung der Nutzung der Energie und Leistung der Energiegewinnungsanlage. Daraus ergeben sich die Nutzung und der Verbund von Teilsystemen 1.1, 1.2 und 1.n der Energiegewinnungsanlage auf unterschiedlichen Teilnutzflächen, um bei unterschiedlicher Ausrichtung des Fahrzeugs F im Fahrbetrieb eine hohe Energieausbeute und verbesserte Leistungsbereitstellung zu erzielen. Der Nutzen ist insbesondere die Stützung des 24V-Bordnetzes, Vermeidung von Tiefentladung der 24V Fahrzeugbatterien und/oder Bereitstellung elektrischer Energie zum Betrieb von Klima-, Lüftungs- und Kälteanlagen.

Die Energiegewinnungsanlage ermöglicht insbesondere die Bereitstellung elektrischer Energie zum Betrieb von Klima-, Lüftungs- und Kälteanlagen. Ein wesentlicher Hauptvorteil der Bereitstellung von elektrischer Energie zum Betrieb von Klima-, Lüftungs- und Kälteanlagen durch eine die Energiegewinnungsanlage ist, dass die Energiegewinnungsanlage umso mehr Energie produziert je mehr Sonnenlicht auf diese fällt und der Klimatisierungsbedarf und somit Leistungsbedarf auch am größten ist. Sinkt die Sonneneinstrahlung und somit die in das Fahrzeug F eingetragene Wärmeenergie, so sinkt auch der Klimatisierungsbedarf. Aufgrund der sinkenden Sonneneinstrahlung sinkt gleichzeitig die Energieproduktion durch die Energiegewinnungsanlage. Der Betrieb der Energiegewinnungsanlage ist zudem bei abgestelltem und abgeschaltetem Fahrzeug F (Zündschlüsselstellung = "Aus") möglich, um den Klimatisierungsbedarf während der Fahrt zu reduzieren und somit fossile Energie einzusparen.

Durch die Bereitstellung elektrischer Energie durch die Energiegewinnungsanlage kann der notwendige Energiebedarf des 24V-Bordnetzes des Fahrzeugs F gedeckt werden. Hierdurch verringert sich der Bedarf an Energiebereitstellung durch einen 24V-Generator/Lichtmaschine, wie er sonst üblicherweise in Nutzfahrzeugen verbaut ist. Da der 24V-Generator seine Energie aus dem Antriebsmoment der Antriebsmaschine des Fahrzeugs F bezieht, lässt sich dadurch fossile Energie einsparen.

Während der Zeit, in der das Fahrzeug F abgestellt und deaktiviert ist (Zündschlüsselstellung = "Aus"), kann eine Tiefentladung der 24V-Bordnetzbatterie durch die Bereitstellung elektrischer Energie durch die Energiegewinnungsanlage verhindert werden. Somit kann die Lebensdauer der 24V-Bordnetzbatterie verlängert und ein frühzeitig notwendiger Batterietausch verhindert werden.

Die Anlagenleistung einer Energiegewinnungsanlage hängt direkt von ihrer Größe (z. B. PV-Modulanzahl) und ihrer Ausrichtung zum einfallenden Sonnenlicht ab. Da die Nutzflächen auf einem Fahrzeug, wie z. B. einem Stadtbus, nicht die gleiche Ausrichtung haben, sind sie gemäß einer Ausführungsform der Erfindung in einzelne Teilsysteme/Teilflächen 1.1, 1.2 und 1.n aufgeteilt.

Als Nutzflächen lassen sich insbesondere die Dachfläche, Seitenfläche/Außenseite "links", Seitenfläche/Außenseite "rechts" und/oder Heckfläche definieren.

Die Erfindung ist nicht auf die oben beschriebenen bevorzugten Ausführungsformen beschränkt, aber wird durch die Ansprüche definiert.

### Bezugszeichenliste

- 1.1: Erstes Teilsystem / Teilfläche
- 1.2: Zweites Teilsystem / Teilfläche
- 1.n: n-tes Teilsystem (n=3, n=4, usw.)
- 2.1: Erste Steuereinrichtung für erstes Teilsystem
- 2.2: Zweite Steuereinrichtung für zweites Teilsystem
- 2.n: n-te Steuereinrichtung für n-tes Teilsystem (n=3, n=4, usw.)
- F: Fahrzeug

## Patentansprüche

1. Fahrzeug (F), vorzugsweise Kraftfahrzeug, insbesondere Nutzfahrzeug, mit
- einer Dachfläche,
- einem Außenumfang, und
- einer Energiegewinnungsanlage (1.1, 1.2), die eine Photovoltaikanlage ist,
wobei
- die Energiegewinnungsanlage (1.1, 1.2) ein erstes Teilsystem (1.1) und zumindest ein zweites Teilsystem (1.2) umfasst, und
- dem ersten Teilsystem (1.1) eine eigene erste Steuereinrichtung (2.1) zum Steuern des ersten Teilsystems (1.1) zugeordnet ist und dem zweiten Teilsystem (1.2) eine eigene zweite Steuereinrichtung (2.2) zum Steuern des zweiten Teilsystems (1.2) zugeordnet ist, und, insbesondere, der Außenumfang zumindest teilweise als Nutzfläche für das erste Teilsystem (1.1) genutzt wird, so dass sich vorzugsweise das erste Teilsystem (1.1) über zumindest einen Teil des Außenumfangs erstreckt,
**dadurch gekennzeichnet, dass** die erste Steuereinrichtung (2.1) und die zweite Steuereinrichtung (2.2) mit zumindest einer Steuereinrichtung zum Steuern der Klima-, Kälte- und/oder Lüftungsanlage des Fahrzeugs (F) in Verbindung steht, wobei die erste Steuereinrichtung (2.1) und die zweite Steuereinrichtung (2.2) und die zumindest eine Steuereinrichtung für die Klima-, Kälte- und/oder Lüftungsanlage dazu ausgebildet sind, miteinander zu interagieren.

2. Fahrzeug (F) nach Anspruch 1, **dadurch gekennzeichnet, dass** der Außenumfang zumindest eine Fensterscheibe umfasst.

3. Fahrzeug (F) nach Anspruch 2, **dadurch gekennzeichnet, dass** die Fensterscheibe als Nutzfläche für das erste Teilsystem (1.1) dient und/oder sich das erste Teilsystem (1.1) über die Fensterscheibe erstreckt.

4. Fahrzeug (F) nach einem der Ansprüche 2 oder 3, **dadurch gekennzeichnet, dass** das erste Teilsystem (1.1) auf die Fensterscheibe aufgebracht ist, in die Fensterscheibe integriert ist und/oder die Fensterscheibe zumindest abschnittsweise überlappt.

5. Fahrzeug (F) nach einem der vorhergehenden Ansprüche, **dadurch gekennzeichnet, dass** das erste Teilsystem (1.1) semitransparent ist und/oder vom Fahrzeug-Innenraum aus durchschaubar ist.

6. Fahrzeug nach einem der vorhergehenden Ansprüche, **dadurch gekennzeichnet, dass** der Außenumfang zwei Außenseiten, eine Heckseite, eine Frontseite und eine Dachfläche umfasst.

7. Fahrzeug (F) nach Anspruch 6, **dadurch gekennzeichnet, dass** das erste Teilsystem (1.1) an einer der Außenseiten, der Heckseite, der Frontseite und/oder auf der Dachfläche angeordnet ist.

8. Fahrzeug (F) nach Anspruch 6 oder 7, **dadurch gekennzeichnet, dass** das zweite Teilsystem (1.2) an der anderen der Außenseiten, der Heckseite, der Frontseite und/oder auf der Dachfläche angeordnet ist.

9. Fahrzeug (F) nach einem der vorhergehenden Ansprüche, **dadurch gekennzeichnet, dass** das erste Teilsystem (1.1) und/oder das zweite Teilsystem (1.2) zumindest eines von folgenden umfasst:
- zumindest ein semitransparentes Energiegewinnungsmodul,
- zumindest ein flexibles Energiegewinnungsmodul,
- zumindest ein monokristallines Energiegewinnungsmodul,
- zumindest ein polykristallines Energiegewinnungsmodul.

10. Fahrzeug (F) nach einem der vorhergehenden Ansprüche, **dadurch gekennzeichnet, dass** die Energiegewinnungsanlage (1.1, 1.2) mit einem Bordnetz und/oder einer Fahrzeugbatterie, insbesondere 24V-Bordnetz und/oder 24V-Fahrzeugbatterie, des Fahrzeugs (F) in Verbindung steht, um das Bordnetz und/oder die Fahrzeugbatterie mit Energie zu versorgen.

11. Fahrzeug (F) nach einem der vorhergehenden Ansprüche, **dadurch gekennzeichnet, dass** die Energiegewinnungsanlage (1.1, 1.2) mit einer Klima-, Kälte- und/oder Lüftungsanlage des Fahrzeugs (F) in Verbindung steht, um die Klima-, Kälte- und/oder Lüftungsanlage mit Energie zu versorgen.

12. Fahrzeug (F) nach einem der vorhergehenden Ansprüche, **dadurch gekennzeichnet, dass** die erste Steuereinrichtung (2.1) einen MPP-Tracker umfasst und/oder die zweite Steuereinrichtung (2.2) einen MPP-Tracker umfasst.

13. Fahrzeug (F) nach einem der vorhergehenden Ansprüche, **dadurch gekennzeichnet, dass** das erste Teilsystem (1.1) zumindest ein Energiegewinnungsmodul umfasst und das zweite Teilsystem (1.2) zumindest ein Energiegewinnungsmodul umfasst.

14. Fahrzeug (F) nach einem der vorhergehenden Ansprüche, **dadurch gekennzeichnet, dass** das erste Teilsystem (1.1) und/oder das zweite Teilsystem (1.2) im Wesentlichen senkrecht ausgerichtet ist.

## Claims

1. A vehicle (F), preferably motor vehicle, in particular utility vehicle, comprising
- a roof surface,
- an outer periphery, and
- an energy generation installation (1.1, 1.2) which is a photovoltaic installation,
wherein
- the energy generation installation (1.1, 1.2) comprises a first subsystem (1.1) and at least one second subsystem (1.2), and
- a dedicated first control device (2.1) is assigned to the first subsystem (1.1) for controlling the first subsystem (1.1) and a dedicated second control device (2.2) is assigned to the second subsystem (1.2) for controlling the second subsystem (1.2), and, in particular, the outer periphery is at least partially used as a useful surface for the first subsystem (1.1), so that the first subsystem (1.1) preferably extends over at least a portion of the outer periphery, **characterized in that** the first control device (2.1) and the second control device (2.2) are connected to at least one control device for controlling the air-conditioning, cooling and/or ventilation installation of the vehicle (F), wherein the first control device (2.1) and the second control device (2.2) and the at least one control device for the air-conditioning, cooling and/or ventilation installation are designed to interact with one another.

2. The vehicle (F) according to Claim 1, **characterized in that** the outer periphery comprises at least one window pane.

3. The vehicle (F) according to Claim 2, **characterized in that** the window pane serves as a useful surface for the first subsystem (1.1) and/or the first subsystem (1.1) extends over the window pane.

4. The vehicle (F) according to either of Claims 2 and 3, **characterized in that** the first subsystem (1.1) is fitted onto the window pane, is integrated into the window pane and/or overlaps the window pane at least in sections.

5. The vehicle (F) according to one of the preceding claims, **characterized in that** the first subsystem (1.1) is semi-transparent and/or is transparent from the vehicle interior.

6. The vehicle according to one of the preceding claims, **characterized in that** the outer periphery comprises two outer sides, a rear side, a front side and a roof surface.

7. The vehicle (F) according to Claim 6, **characterized in that** the first subsystem (1.1) is arranged on one of the outer sides, the rear side, the front side and/or on the roof surface.

8. The vehicle (F) according to Claim 6 or 7, **characterized in that** the second subsystem (1.2) is arranged on the other of the outer sides, the rear side, the front side and/or on the roof surface.

9. The vehicle (F) according to one of the preceding claims, **characterized in that** the first subsystem (1.1) and/or the second subsystem (1.2) comprise/comprises at least one of the following:
- at least one semi-transparent energy generation module,
- at least one flexible energy generation module,
- at least one monocrystalline energy generation module,
- at least one polycrystalline energy generation module.

10. The vehicle (F) according to one of the preceding claims, **characterized in that** the energy generation installation (1.1, 1.2) is connected to an on-board electrical system and/or a vehicle battery, in particular a 24 V on-board electrical system and/or 24 V vehicle battery, of the vehicle (F) in order to supply energy to the on-board electrical system and/or the vehicle battery.

11. The vehicle (F) according to one of the preceding claims, **characterized in that** the energy generation installation (1.1, 1.2) is connected to an air-conditioning, cooling and/or ventilation installation of the vehicle (F) in order to supply energy to the air-conditioning, cooling and/or ventilation installation.

12. The vehicle (F) according to one of the preceding claims, **characterized in that** the first control device (2.1) comprises an MPP tracker and/or the second control device (2.2) comprises an MPP tracker.

13. The vehicle (F) according to one of the preceding claims, **characterized in that** the first subsystem (1.1) comprises at least one energy generation module and the second subsystem (1.2) comprises at least one energy generation module.

14. The vehicle (F) according to one of the preceding claims, **characterized in that** the first subsystem (1.1) and/or the second subsystem (1.2) are/is oriented substantially vertically.

## Revendications

1. Véhicule (F), de préférence véhicule automobile, notamment véhicule utilitaire, comprenant
- une surface de toit,
- un pourtour extérieur, et
- un équipement de production d'énergie (1.1, 1.2), qui est un équipement photovoltaïque,
- l'équipement de production d'énergie (1.1, 1.2) comportant un premier système partiel (1.1) et au moins un deuxième système partiel (1.2), et
- un premier dispositif de commande (2.1) destiné à commander le premier système partiel (1.1) étant associé au premier système partiel (1.1) et un deuxième dispositif de commande (2.2) destiné à commander le deuxième système partiel (1.2) étant associé au deuxième système partiel (1.2), et notamment le pourtour extérieur étant utilisé au moins partiellement comme surface utile pour le premier système partiel (1.1), de sorte que le premier système partiel (1.1) s'étend de préférence sur au moins une partie du pourtour extérieur,
**caractérisé en ce que** le premier dispositif de commande (2.1) et le deuxième dispositif de commande (2.2) sont en liaison avec au moins un dispositif de commande destiné à commander l'équipement de climatisation, de réfrigération et/ou de ventilation du véhicule (F), le premier dispositif de commande (2.1) et le deuxième dispositif de commande (2.2) et l'au moins un dispositif de commande pour l'équipement de climatisation, de réfrigération et/ou de ventilation étant configurés pour interagir entre eux.

2. Véhicule (F) selon la revendication 1, **caractérisé en ce que** le pourtour extérieur comporte au moins une vitre.

3. Véhicule (F) selon la revendication 2, **caractérisé en ce que** la vitre sert de surface utile pour le premier système partiel (1.1) et/ou le premier système partiel (1.1) s'étend sur la vitre.

4. Véhicule (F) selon l'une des revendications 2 et 3, **caractérisé en ce que** le premier système partiel (1.1) est appliqué sur la vitre, est intégré dans la vitre et/ou chevauche la vitre au moins dans certaines portions.

5. Véhicule (F) selon l'une des revendications précédentes, **caractérisé en ce que** le premier système partiel (1.1) est semi-transparent et/ou transparent depuis l'espace intérieur du véhicule.

6. Véhicule selon l'une des revendications précédentes, **caractérisé en ce que** le pourtour extérieur comporte deux côtés extérieurs, un côté arrière, un côté avant et une surface de toit.

7. Véhicule (F) selon la revendication 6, **caractérisé en ce que** le premier système partiel (1.1) est disposé sur l'un parmi les côtés extérieurs, le côté arrière, le côté avant et/ou sur la surface de toit.

8. Véhicule (F) selon la revendication 6 ou 7, **caractérisé en ce que** le deuxième système partiel (1.2) est disposé sur l'autre parmi les côtés extérieurs, le côté arrière, le côté avant et/ou sur la surface de toit.

9. Véhicule (F) selon l'une des revendications précédentes, **caractérisé en ce que** le premier système partiel (1.1) et/ou le deuxième système partiel (1.2) comporte au moins l'un des éléments suivants :
- au moins un module de production d'énergie semi-transparent,
- au moins un module de production d'énergie flexible,
- au moins un module de production d'énergie monocristallin,
- au moins un module de production d'énergie polycristallin.

10. Véhicule (F) selon l'une des revendications précédentes, **caractérisé en ce que** l'équipement de production d'énergie (1.1, 1.2) est en liaison avec un réseau de bord et/ou une batterie de véhicule, notamment un réseau de bord de 24 V et/ou une batterie de véhicule de 24 V, du véhicule (F) afin d'alimenter le réseau de bord et/ou la batterie de véhicule en énergie.

11. Véhicule (F) selon l'une des revendications précédentes, **caractérisé en ce que** l'équipement de production d'énergie (1.1, 1.2) est en liaison avec un équipement de climatisation, de réfrigération et/ou de ventilation du véhicule (F) afin d'alimenter l'équipement de climatisation, de réfrigération et/ou de ventilation en énergie.

12. Véhicule (F) selon l'une des revendications précédentes, **caractérisé en ce que** le premier dispositif de commande (2.1) comporte un dispositif de poursuite du point d'énergie maximal et/ou le deuxième dispositif de commande (2.2) comporte un dispositif de poursuite du point d'énergie maximal.

13. Véhicule (F) selon l'une des revendications précédentes, **caractérisé en ce que** le premier système partiel (1.1) comporte au moins un module de production d'énergie et le deuxième système partiel (1.2) au moins un module de production d'énergie.

14. Véhicule (F) selon l'une des revendications précédentes, **caractérisé en ce que** le premier système partiel (1.1) et/ou le deuxième système partiel (1.2) sont orientés sensiblement verticalement.
